# EUROPÄISCHE PATENTSCHRIFT

(11) **EP 1 799 533 B1**
(45) Veröffentlichungstag und Bekanntmachung des Hinweises auf die Patenterteilung: **18.04.2012**
(21) Anmeldenummer: 05798032.8
(22) Anmeldetag: 22.07.2005
(51) Int. Cl.: B62J 9/00, B62J 11/00

(54) **BEFESTIGUNG EINES ADAPTERS FÜR FAHRRÄDER**
DEVICE FOR FASTENING AN ADAPTER TO ABUTTING BAR SECTIONS OF BICYCLES
FIXATION D'UN ADAPTATEUR POUR BICYCLETTES

(30) Priorität: 22.07.2004 DE 202004011536 U
(43) Veröffentlichungstag der Anmeldung: 27.06.2007
(73) Patentinhaber: ORTLIEB, Hartmut, 91560 Heilsbronn (DE)
(72) Erfinder: ORTLIEB, Hartmut, 91560 Heilsbronn (DE)
(74) Vertreter: Schuhmann, Albrecht
(86) Internationale Anmeldenummer: PCT/DE2005/001308
(87) Internationale Veröffentlichungsnummer: WO 2006/021175

(56) Entgegenhaltungen:
- WO-A-00/43257
- WO-A1-2005/087573
- CH-A5- 687 221
- DE-A1- 4 008 209
- DE-A1- 4 008 211
- US-A- 4 315 583
- US-A- 4 415 105
- US-B1- 6 279 803

## Beschreibung

Die vorliegende Erfindung betrifft eine Vorrichtung zur Befestigung eines Adapters an aufeinander stoßenden Stangenteilen von Fahrrädern mit den Merkmalen des Oberbegriffs des Anspruchs 1.

Adapter für Lenkertaschen sind seit vielen Jahren bekannt. So zeigt die US-A-47 98 318 einen Adapter, bestehen aus einer Platte mit einem Schnapphacken, in die ein entsprechendes Gegenstück einer Lenkertasche einrastbar ist, die Bandklemmen für die Lenkerstange aufweist, die feststellbar sind. Einen ähnlichen Aufbau weist die WO 98/22332 auf, bei in Aufnahmen des Adapters einrastbare Schellen vorhanden sind. Um ein Kippen des Adapters zu vermeiden, ist eine Haltebrücke vorhanden, die unter den Lenkervorbau greift. Bei dem Lenkertaschenadapter gemäß DE-C-40 08 211, die die Merkmale der Präambel des Anspruchs 1 zeigt, erfolgt das Abstützen des Adapters am Vorbau durch ein einstellbares Seil, das schlaufenartig unter den Vorbau fasst. DE DE-U-299 20 778 und DE-U-201 01 851 weisen Schellen für die Lenkerstange auf, wobei die Verbindung zwischen Adapter und einer Platte an der Lenkertasche durch einen Drehverschluss, bzw. Rastmittel erfolgt. Die DE-U-203 00 747 weist eine Mechanik zur Einstellung der Neigung der Lenkertasche gegenüber dem Adapter auf. Hier ist eine Verzahnung vorhanden, die gegen Federdruck horizontal in und außer Eingriff zu bringen ist, wobei das mit der Lenkertasche verbindbare Teil des Adapters verdreht werden kann, wenn die Verzahnung außer Eingriff steht. Diese Vorrichtung besteht aus relativ vielen Teilen, die den Aufbau verkomplizieren. Da heute die Vorbau/Lenkerkonfigurationen bei Fahrrädern verschiedener Hersteller in großem Maße variieren, passen die bekannten Lenkertaschenadapter, die sich an Standardkonfigurationen orientieren, häufig nicht und können keine Verwendung finden.

Aufgabe der vorliegenden Erfindung ist es, einen Adapter für Lenkertaschen zu schaffen, der flexibel für verschiedene Arten der Vorbau/Lenkerkonfiguration von Fahrrädern anwendbar ist, bei dem eine Einstellung an der Lenkstange einfach und sicher zu betätigen ist und der besonders wenig Platz in Anspruch nimmt.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist eine Vorrichtung zur Befestigung eines Adapters für Zubehör an aufeinander stoßenden Stangenteilen von Fahrrädern, wobei zwischen dem Adapter und dem Zubehör eine Rasteinrichtung vorhanden ist, wobei der Adapter an der Seite eines ersten Stangenteils, die einem zweiten, von diesem abkragenden Stangenteil des Fahrrads entgegen gesetzt liegt, anliegt und Befestigungsmittel für den Adapter an den Stangenteilen vorhanden sind, dadurch gekennzeichnet, dass die Befestigungsmittel aus einem Seil (4) bestehen, das von einer Seite des Adapter (3) aus um das erste und zweite Stangenteil durch die zweite Seite des Adapters (3) und von dort wieder über das erste und zweite Stangenteil zurück zur ersten Seite des Adapters (3) geführt ist.

Vorzugsweise ist der Adapter mit zwei Auflageschenkeln der Form der Lenkstange angepasst.

Nach der bevorzugten Ausführung der Erfindung ist ein Spannelement oder eine Spannvorrichtung für das Seil vorhanden. Alternativ können wenigstens zwei Spannelemente oder Spannvorrichtungen vorhanden sein. Das Spannelement beispielsweise ein Keil oder Knebel ist, das zwischen einem der Stangenteile oder dem Adapter und dem Seil angeordnet ist. Das Spannelement oder die Spannvorrichtung kann auch im Adapter angeordnet sein und aus Befestigungselementen wie einer Gewindehülse und einer Schraube oder einer Gewindestange und einer Hülsenmutter bestehen, wobei wenigstens ein Seilende fest mit einem der genannten Teile verbunden ist.

Vorzugsweise ist ein Klemmelement als Widerlager für das Spannelement und/oder Verdrehsicherung für den Adapter vorhanden. So kann das Seil mit der Spannvorrichtung voreingestellt und mit dem Klemmelement festgezogen werden. Das Klemmelement ein beispielsweise ein Kabelklemmer, Keilelement oder dergleichen ist.

Vorteilhaftweise ist in dem Adapter eine Ausnehmung, Bohrung oder dergleichen für ein überstehendes Seilende vorhanden.

Vorzugsweise besteht das Seil aus Kunststoff oder Metalldraht und weist eine Ummantelung aus Kunststoff auf.

Im Folgenden wird die Erfmdung anhand von Zeichnungen rein beispielhaft näher beschrieben. Dabei zeigen:
Fig. 1 eine Perspektivdarstellung eines Adapters mit Befestigung an einem Fahrradlenker/vorbau von vorne;
Fig. 2 eine Perspektivdarstellung des Adapters mit Befestigung von hinten.

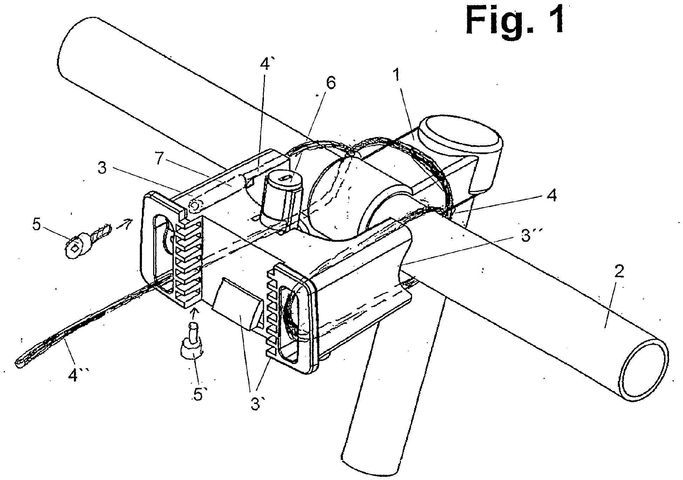

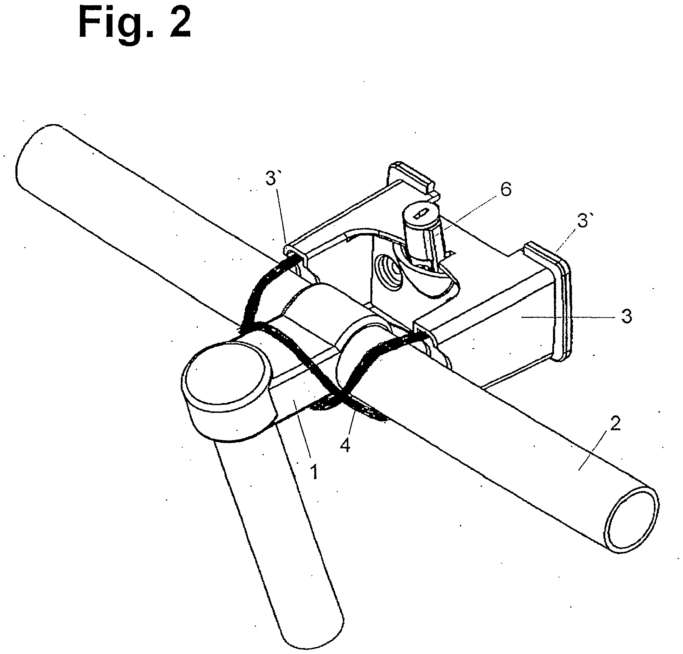

Fig. 1 und Fig. 2 zeigen eine Lenkstange 2 eines Fahrrads, die in bekannter Weise mit einem senkrecht zu ihr stehenden Vorbau 1 verbunden ist, der wiederum an einem etwa senkrecht stehenden Rohr angeschlossen ist. Ein Adapter 3 für Zubehör, z.B. eine Fahrradfronttasche wird an der Lenkstange 2 und dem Vorbau 1 befestigt. Der Adapter ist vorne in bekannter Weise mit Anschlusselementen 3' 6 für das Zubehör versehen und weist an seiner Rückseite zwei Auflageschenkel 3" auf, die der Form der Lenkstange angepasst sind. Die Befestigung das Adapters 3 an der Lenkstange 2 und dem Vorbau 1 erfolgt durch ein einziges Seil 4. Das Seil ist mit beiden Freien Enden 4', 4" auf der einen Seite des Adapters 3 in diesem befestigt. Hierzu können Schrauben 5, 5' zum Einsatz kommen, wobei eine bevorzugte Befestigung so erfolgt, dass das freie Ende 4' des Seils 4 fest mit einer Gewindehülse 7 verbunden ist, die durch eine in dem Adapter 3 axial unbeweglich, aber drehbar angeordnete Schraube 5' angezogen wird. Bei der gezeigten Ausführung ist das Seil von dem Adapter aus auf einer Seite des zweiten Stangenteils unter dem ersten Stangenteil hindurch, über das zweite Stangenteil, auf der anderen Seite des zweiten Stangenteils unter dem ersten Stangenteil zurück zu dem Adapter und von diesem auf der gleichen Seite des zweiten Stangenteils über das erste Stangenteil, unter das zweite Stangenteil und auf der anderen Seite des zweiten Stangenteils über das erste Stangenteil zurück zum Adapter geführt.

## Patentansprüche

1. Vorrichtung zur Befestigung eines Adapters (3) für Zubehör an aufeinander stoßenden Stangenteilen von Fahrrädern, wobei zwischen dem Adapter und dem Zubehör eine Rasteinrichtung vorhanden ist, wobei der Adapter an der Seite eines ersten Stangenteils, die einem zweiten, von diesem abkragenden Stangenteil des Fahrrads entgegen gesetzt liegt, anliegt und Befestigungsmittel für den Adapter an den Stangenteilen vorhanden sind,
**dadurch gekennzeichnet,**
**dass** die Befestigungsmittel aus einem Seil (4) bestehen, das von einer Seite des Adapter (3) aus um das erste und zweite Stangenteil durch die zweite Seite des Adapters (3) und von dort wieder über das erste und zweite Stangenteil zurück zur ersten Seite des Adapters (3) geführt ist.

2. Vorrichtung nach Anspruch 1,
**dadurch gekennzeichnet,**
**dass** die Seilenden (4', 4") in dem Adapter befestigt sind.

3. Vorrichtung nach Anspruch 1,
**dadurch gekennzeichnet,**
**dass** das erste Stangenteil die Lenkstange (2) und das zweite Stangenteil der Vorbau (1) des Fahrrads ist.

4. Vorrichtung nach Anspruch 3,
**dadurch gekennzeichnet,**
**dass** der Adapter (3) mit zwei Auflageschenkeln (3 ") der Form der Lenkstange angepasst ist.

5. Vorrichtung nach einem der vorhergehenden Ansprüche,
**dadurch gekennzeichnet,**
**dass** ein Spannelement oder eine Spannvorrichtung für das Seil (4) vorhanden ist.

6. Vorrichtung nach Anspruch 5,
**dadurch gekennzeichnet,**
**dass** wenigstens zwei Spannelemente oder Spannvorrichtungen vorhanden sind.

7. Vorrichtung nach Anspruch 5,
**dadurch gekennzeichnet,**
**dass** das Spannelement ein Keil oder Knebel ist, das zwischen einem der Stangenteile oder dem Adapter und dem Seil (4) angeordnet ist.

8. Vorrichtung nach Anspruch 5,
**dadurch gekennzeichnet,**
**dass** das Spannelement oder die Spannvorrichtung im Adapter angeordnet ist und aus Befestigungselementen wie einer Gewindehülse (7) und einer Schraube (5) oder einer Gewindestange und einer Hülsenmutter besteht, wobei wenigstens ein Seilende (4') fest mit einem der genannten Teile verbunden ist.

9. Vorrichtung nach einem der Ansprüche 5 bis 7,
**dadurch gekennzeichnet,**
**dass** ein Klemmelement als Widerlager für das Spannelement und/oder Verdrehsicherung für den Adapter vorhanden ist.

10. Vorrichtung nach Anspruch 9,
**dadurch gekennzeichnet,**
**dass** das Klemmelement ein Kabelklemmer, Keilelement oder dergleichen ist.

11. Vorrichtung nach einem der vorhergehenden Ansprüche,
**dadurch gekennzeichnet,**
**dass** in dem Adapter eine Ausnehmung, Bohrung oder dergleichen für ein überstehendes Seilende (4') vorhanden ist.

12. Vorrichtung nach einem der vorhergehenden Ansprüche,
**dadurch gekennzeichnet,**
**dass** das Seil eine Ummantelung aus Kunststoff aufweist.

13. Vorrichtung nach einem der vorhergehenden Ansprüche,
**dadurch gekennzeichnet,**
**dass** das Seil ein Drahtseil ist.

14. Vorrichtung nach einem der Ansprüche 1 bis 11,
**dadurch gekennzeichnet,**
**dass** das Seil ein Kunststoffseil ist.

## Claims

1. Device for fastening an adapter (3) for accessories to abutting bar parts of bicycles, whereby a stop arrangement is provided between the adapter and the accessories, the adapter lying on the side of a first bar part opposite a second bar part that is cantilevered from the first bar part, and whereby a fastening arrangement is provided for the adapter at the bar parts,
**characterized in that**
the fastening arrangement consists of a rope (4) that leads from one side of the adapter (3) around the first and second bar parts through the second side of the adapter (3) and from there again over the first and second bar parts back to the first side of the adapter (3).

2. Device according to Claim 1,
**characterized in that**
the rope ends (4', 4") are fastened in the adapter.

3. Device according to Claim 1,
**characterized in that**
the first bar part is the handle bar (2) of the bicycle and the second bar part is the front triangle (1) of the bicycle.

4. Device according to Claim 3,
**characterized in that**
the adapter (3) is fitted to the shape of the handle bar with two bearing legs (3").

5. Device according to one of the preceding claims,
**characterized in that**
a tensioning element or tensioning device is provided for the rope (4).

6. Device according to Claim 5,
**characterized in that**
at least two tensioning elements or tensioning devices are provided.

7. Device according to Claim 5,
**characterized in that**
the tensioning element consists of a wedge or toggle provided between one of the bar parts or the adapter and the rope (4).

8. Device according to Claim 5,
**characterized in that**
the tensioning element or tensioning device is provided in the adapter and consists of fastening elements such as a threaded sleeve (7) and a screw (5) or a threaded pin and a sleeve nut, whereby at least one rope end (4') is firmly connected to one of the said parts.

9. Device according to one of Claims 5 to 7,
**characterized in that**
a clamping element is provided as a counter bearing for the tensioning element and/or as an anti-rotation lock for the adapter.

10. Device according to Claim 9,
**characterized in that**
the clamping element consists of a cable clamp, wedge element or such.

11. Device according to one of the preceding claims,
**characterized in that**
the adapter is provided with a recess, drilled hole or such for a projecting rope end (4').

12. Device according to one of the preceding claims,
**characterized in that**
the rope is provided with a plastic liner.

13. Device according to one of the preceding claims,
**characterized in that**
the rope is a wire cable.

14. Device according to one of Claims 1 to 11,
**characterized in that**
the rope is a plastic rope.

## Revendications

1. Dispositif de fixation d'un adaptateur (3) pour accessoire sur des éléments de barre convergents de bicyclettes, un système d'enclenchement étant présent entre l'adaptateur et l'accessoire, l'adaptateur étant adjacent à un côté d'une première partie de barre qui est opposée à une deuxième partie de barre faisant saillie à partir de cette dernière et des moyens de fixation de l'adaptateur sur les parties de barre étant présents, **caractérisé en ce que** les moyens de fixation sont constitués d'un câble (4), qui à partir d'un côté de l'adaptateur (3) est guidé autour de la première et de la deuxième parties de barre à travers le deuxième côté de l'adaptateur (3) et de cet endroit, par l'intermédiaire de la première et de la deuxième partie de barre, en retour vers le premier côté de l'adaptateur (3).

2. Dispositif selon la revendication 1, **caractérisé en ce que** les extrémités du câble (4', 4") sont fixées dans l'adaptateur.

3. Dispositif selon la revendication 1, **caractérisé en ce que** la première partie de barre est le guidon (2) et la deuxième partie de barre est l'avant-corps (1) de la bicyclette.

4. Dispositif selon la revendication 3, **caractérisé en ce que**, par deux branches d'appui (3"), l'adaptateur (3) est adapté à la forme du guidon.

5. Dispositif selon l'une quelconque des revendications précédentes, **caractérisé en ce qu'**un élément de serrage ou un dispositif de serrage pour le câble est présent (4).

6. Dispositif selon la revendication 5, **caractérisé en ce qu'**au moins deux éléments de serrage ou dispositifs de serrage sont présents.

7. Dispositif selon la revendication 5, **caractérisé en ce que** l'élément de serrage est une clavette ou une manette, qui est disposée entre l'une des parties de barre ou l'adaptateur et le câble (4).

8. Dispositif selon la revendication 5, **caractérisé en ce que** l'élément de serrage ou le dispositif de serrage est disposé dans l'adaptateur et est constitué d'éléments de fixation, tels qu'une douille taraudée (7) et une vis (5) ou une tige filetée et un écrou douille, au moins une extrémité de câble (4') étant reliée fixement avec l'une des parties citées.

9. Dispositif selon l'une quelconque des revendications 5 à 7, **caractérisé en ce qu'**un élément de serrage est présent en tant que contre-appui pour l'élément de serrage et/ou sécurité antirotation pour l'adaptateur.

10. Dispositif selon la revendication 9, **caractérisé en ce que** l'élément de serrage est un serre-câble, un élément de clavette ou similaire.

11. Dispositif selon l'une quelconque des revendications précédentes, **caractérisé en ce que** dans l'adaptateur est présent un évidement, un perçage ou similaire pour une extrémité débordante du câble (4').

12. Dispositif selon l'une quelconque des revendications précédentes, **caractérisé en ce que** le câble comporte une gaine en matière plastique.

13. Dispositif selon l'une quelconque des revendications précédentes, **caractérisé en ce que** le câble est un câble en fil métallique.

14. Dispositif selon l'une quelconque des revendications 1 à 11, **caractérisé en ce que** le câble est un câble en matière plastique.
